# EUROPEAN PATENT SPECIFICATION

(11) **EP 3 252 995 B1**
(45) Date of publication and mention of the grant of the patent: **27.03.2019**
(21) Application number: 17460031.2
(22) Date of filing: 01.06.2017
(51) Int. Cl.: H04L 12/24, H04L 29/06, H04W 12/06

(54) **METHOD FOR DETECTING NETWORK FAILURES**
VERFAHREN ZUM AUFFINDEN VON NETZWERKFEHLERN
PROCÉDÉ DE DÉTECTION DES DÉFAILLANCES DE RÉSEAU

(30) Priority: 02.06.2016 PL 41741016
(43) Date of publication of application: 06.12.2017
(73) Proprietor: Orange Polska Spolka Akcyjna, 02-326 Warszawa (PL)
(72) Inventor: Zych, Piotr, 02-673 Warszawa; (PL)
(74) Representative: Palka, Grazyna

(56) References cited:
- US-A1- 2008 209 030
- US-B1- 7 099 305
- US-B1- 9 106 518
- ZYCH PIOTR: "Network failure detection based on correlation data analysis", AEU - INTERNATIONAL JOURNAL OF ELECTRONICS AND COMMUNICATIONS, ELSEVIER, AMSTERDAM, NL, vol. 77, 22 April 2017 (2017-04-22), pages 27-35, XP085030418, ISSN: 1434-8411, DOI: 10.1016/J.AEUE.2017.04.014

## Description

The object of the invention is a method for detecting network failures, based on data from RADIUS (Remote Authentication Dial In User Service) server within the range of PPP (Point to Point Protocol) sessions of broadband service users.

The method can be use, among others, in monitoring of network status, where data from RADIUS server are subject to correlation analysis.

For a telecommunications operator, effective detection of failures in the access and aggregation network is the key to ensure the continuity of service delivery. Many standard network monitoring systems are available on the market, but when using only standard systems, it is not possible to detect all failures.

Detecting of network failures is a critical process for each telecommunications operator. It must be fast, be capable to provide data without delays and be reliable. These requirements are critical because network failures can affect thousands, sometimes even millions, of services. In some cases, failure of a critical element of the infrastructure can affect people in different countries (e.g. a failure affecting the BGP routing protocol). It is obvious that the operator must react to such failures as quickly as possible.

Teams who manage access and aggregation network, responsible for monitoring, use Network Management Systems (NMS) for this purpose. These systems are provided by manufacturers of network devices or software used. Due to the large number of different types of devices in the network and the diversification of suppliers, the operator must simultaneously use a variety of different network management systems. This causes difficulties because operating in many systems simultaneously is not optimal. For this reason, in many cases, additional overlay systems are used which unify, in a single location, data from multiple NMSes.

There are two options for network monitoring: cyclic scanning and reception of asynchronous events.

The advantage of cyclic monitoring is reliability. The system sends requests to the device and knows whether and when the device responded. However, scanning can only be performed at predefined intervals, therefore there is always a delay in the detection of events.

The above-mentioned disadvantage is not present in the case of asynchronous monitoring. In this case, the network elements are configured to send information about the selected events without any delay. However, in asynchronous monitoring, there is uncertainty as to whether the monitoring system receives all events because most of them are sent using UDP (User Datagram Protocol) which does not provide any guarantee of transmission. In addition, this type of monitoring cannot be used to verify availability of devices (if the device turns off, it will not send any alarm).

It should also be borne in mind that failures in the network can be very complicated. Often, their detection is not possible with the analysis of a single network resource. The above-mentioned types of monitoring use predefined sets of data in which possible types of failure are defined, such as device availability, port operating status, processor load or device temperature.

The operator is never certain whether all types of failure can be defined in advance and whether detection of any failure will be possible using a defined set of data. A failure will not be detected if it is more complex and not visible by standard data analysis.

A system for monitoring a service delivery network is known from document US8065727. The system monitors at least one parameter associated with the service. If the parameter is outside the thresholds, then appropriate persons (e.g. customer, maintenance personnel) will be notified on unavailability of services. The parameters monitored by the system include: loss of service-related packages, delay of service-related packages, availability of the service-related Internet Protocol (IP). The solution is based on the monitoring of a parameter change which indicates a network problem, and data is received, among others, from RADIUS servers.

A tool for analysing network errors is known from document CA2400306. The tool allows tests to be written to check the status of the network. These tests can take place at a scheduled time. Both the connection itself and the connection parameters (e.g. data exchange) can be tested. The tool has two operating modes. In the first one, tests are performed preventively, which allows problems to be prevented before they are noticed by the customer. In the second mode, the tool allows the use of the test in order to quickly identify the source of the problem which was found. The solution can test networks which include a RADIUS server and PPP, and when a problem is detected, it signals this fact, but it does not interfere in the network in any way.

Document US9106518 B1 discloses a method for detection of network brownouts (network failures). Network failures are identified by comparing the number of requests in an alternative network location with a threshold value over time.

Document US7099305 B1 discloses a system and method for automated monitoring of availability of xDSL access networks. The system comprises a measurement device, a broadband remote access server (BRAS), a remote authentication dial-in user service server (RADIUS), a data collector, wherein the measurement device automatically establishes a PPP session with BRAS and wherein the RADIUS server is collecting data relating to a PPP session. A method comprising steps of the automatic establishing the PPP session by the measurement device to the BRAS, automatic collecting of the data related to the PPP session by RADIUS and automatic retrieving PPP session from the RADIUS server by a data collector.

The solution according to the invention allows detection of all failures in the monitored area, which results in detection of a much larger number of failures in relation to the failures detected by the monitoring systems used so far. therefore it improves, "complements", the monitoring systems currently in use. The solution allows shortening of the time of failure and unavailability of services for customers, and also allows monitoring of passive network elements.

A method for detecting network failures is defined according to independent claim 1.

Preferably, between the step of confirmation of disconnection of PPP sessions and the step of alarm generation, a reboot step is performed which includes rebooting of at least one resource for which a failure was detected and/or of dependent resources, a step of waiting to re-establish a PPP session and verification of the minimum threshold value of the number of re-established PPP sessions.

Preferably, the step of receiving and recording is performed by a receiving module, the step of analysis of recorded data and verification of disconnection of PPP sessions at a set time is performed by an analysis module, and subsequent steps of the method are performed by an execution module.

Preferably, in the step of notifying users, Customer Relationship Management, CRM, is used.

Preferably, data in the steps of: recording of data from RADIUS server logs, retrieval of data from a specific network resource, verification of disconnections of PPP sessions on a device higher in the network hierarchy, reboot of at least one resource and alarm generation; are sent through at least one means from the group consisting of protocols: IP, UDP, RADIUS, SNMP, NetConf, SSH, telenet, HTTP, WebService, RMI and by means of a database.

Preferably, the step of receiving and recording is performed by a receiving module implemented in the RADIUS server.

Preferably, the steps of the method are performed in real time.

Preferably, the steps of the method are performed under the control of a computer program.

The step of alarm generation can be performed in many ways, for example by means of GUI (Graphical User Interface) of the monitoring system, in a web browser or via alarm to another monitoring system - then such sending is possible by, for example: WebService, database, HTTP, RMI, SNMP methods.

The solution according to the invention can be performed by a system for detecting failures connected to a RADIUS server which is further connected to BNG/BRAS routers. BNG/BRAS routers are connected to switches which can be connected to DSLAM, to other switches and to the system for detecting failures. DSLAM, apart from being connected to the system for detecting failures and to switches, is connected to modems. In addition, the system for detecting failures is connected to inventory systems and sends information/data to a maintenance system and to a CRM system.

In addition, the solution according to the invention includes two basic logic modules run on one or more physical servers, an application and a database.

The application, performing the method, comprises a receiving module, an analysis module and an execution module which comprises auxiliary sub-modules (among others, coordination modules).

Advantages of the solution include:
- faster start of the repair;
- faster completion of the repair;
- increasing the effectiveness of the monitoring system;
- limiting the time when services are not available;
- limiting the number of customers calling the helpline;
- informing customers about the damage/failure automatically and without any delay;
- reducing costs;
- ability to interact with client devices (for example, by reboot);
- ability to send tickets with information about damage to failure eliminating units.

The proposed solution allows the operator to detect all events related to users/customers, to detect all failures in the monitored area. Due to detection of a larger number of events, there is a possibility of immediate reaction in order to restore services to users as quickly as possible, which results in a greater service continuity and in a better quality thereof, and in the increase of user/customer trust in the network operator. Reliability and failure-free performance of the network are the key parameters for the operator selection on the telecommunication services market.

The presented solution is generic and can be activated independently of the individual elements of the access and aggregation network.

The method according to the invention runs in parallel on different network resources.

The object of the invention is shown in the drawing where Fig. 1 shows a simplified diagram of a method for detecting network failures, Fig. 2 shows a detailed diagram of the method, Fig. 3 shows an embodiment of the solution in a simplified network architecture.

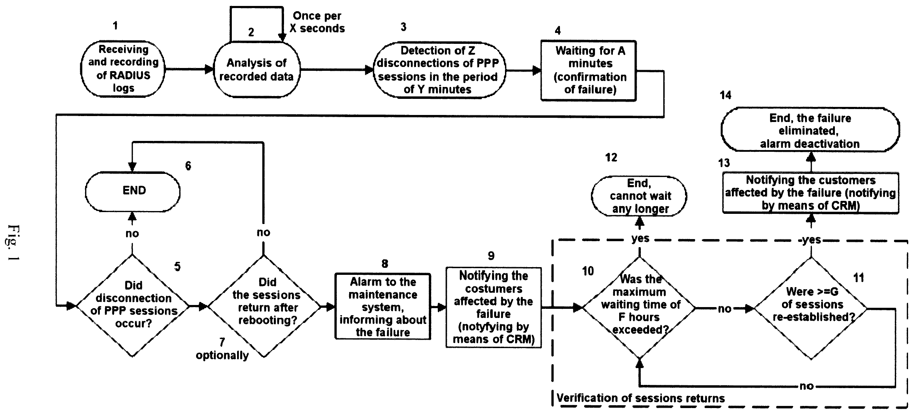

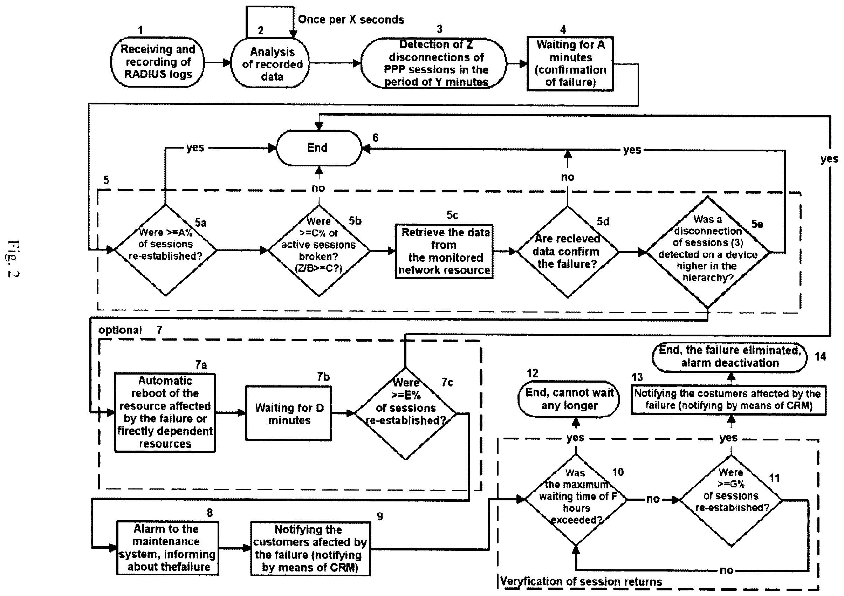

The method according to the invention (shown in Fig. 1 and Fig. 2) in its embodiments allows detecting of group disconnection of PPP sessions which is defined as a specific number of disconnections of PPP sessions on the same network resource within a specific time period. This means that although these are user sessions, it can be stated with high probability that the existing problem relates to a network element, and not only user modems.

In various embodiments, the analysed network resource can be any element between user modems and BNG (Broadband Network Gateway) / BRAS (Broadband Remote Access Server), such as (according to the network hierarchy):
a) copper cables or optical cables;
b) cards for DSLAM/OLT;
c) whole DSLAM/OLT devices;
d) cards on switches;
e) switches;
f) cards on aggregation switches;
g) aggregation switches;
h) cards on BRAS/BNG devices;
i) BRAS/BNG devices.

Each of the solutions on individual network resources operates independently, in parallel and correlates (analyses) the same set of data. More precisely, the solution working for a particular type of network resource looks only for data on this type of resource. For example, the solution operating for a DSLAM device searches for group breaks of PPP sessions on DSLAM devices. Using the method it is possible to diagnose each of the said network resources in the access and aggregation networks by analysing only the state of the PPP session in the network. Thanks to the inventory information, it is possible to restore the full path of the PPP session compilation between the modem and BNG/BRAS. Restoring the path for all sessions makes it possible to analyse not only the state of individual networks but also to analyse the state of individual resources. The method operates in real time, which means that it must be able to process hundreds of RADIUS events per second without delay (for a network consisting of several millions of devices).

In the embodiment shown in Fig. 2, the system (for example, through the receiving module) receives in real time 1 data sent there from RADIUS servers (on the network card, RADIUS packages/logs sent by a stack of IP/UDP/RADIUS protocols are received). The data are recorded 1 in a database or in operating memory, for further searching. In another embodiment, the step of receiving and recording 1 is performed, for example, by the receiving module implemented in the RADIUS server.

Then the system once per X seconds performs an analysis of the received data 2 (for example, through the analysis module). In an embodiment, X=15 seconds, and verification is performed in a loop (at least once). In other embodiments, X = 10 seconds, X = 20 seconds, X = 30 seconds or X = 45 seconds.

Then, the system verifies 3 (for example through the analysis module) whether Z disconnections of PPP sessions were obtained from a defined network resource in time window of Y minutes. In the embodiments, the resource is one of the aforementioned network elements. In the embodiment for the resource card on DSLAM device: Y = 3 minutes, while Z = 10 disconnections.

If Z disconnections are detected in the period of Y minutes, the system proceeds to step 4, i.e. to waiting for A minutes for failure confirmation. In the embodiment for the resource card on DSLAM device: A=10 minutes.

Once the defined time has elapsed, the system (for example, through the execution module) verifies 5 disconnection of PPP sessions, wherein when the verification 5 of disconnection of PPP sessions is negative, the method for detecting failures is ended 6.

Negative verification 5 of disconnection of PPP sessions includes:
- verification 5a of the threshold value of the number of re-established PPP sessions, i.e. checking whether minimum A% of sessions were re-established. In the embodiments, A assumes a value between 50-80. If so, the system interrupts operation 6 (in the embodiments, verification 5a is performed based on backward search of data; the resources for which a group disconnection of PPP sessions occurred are listed as a list of disconnected PPP logins or *calling-station-id:* it is searches backwards whether the disconnected logins or *calling-station-id* re-established the session, this is visible as *accounting* data with *Start* status for these logins or *calling-station-id).* In the embodiments, the search is performed on the database, or the received RADIUS logs are gathered in the local array on the stack, and are reversed from the newest log to the oldest one (as far as necessary), for example until the moment of recorded disconnection of PPP sessions;
- verification 5b of the ratio of the number of disconnected PPP sessions to previously active PPP sessions on a specific resource. The system searches RADIUS *Accounting* data backwards in order to evaluate how many sessions were active on a given resource before disconnection is detected. The searching is so backwards as long a PPP session can be active in a given network or as often *Interim-Update* are generated. *Accounting* logs with *Start* or *Interim-Update* status are searched for, after which logs any disconnection of PPP session did not occur until the group disconnection (any log with *Stop* status was not detected). The search is the same as in the previous step, i.e. in terms of login or *calling-station-id* (if they matches it means that it is the same resource that was disconnected). The backwards search is needed from the moment of recorded disconnection of PPP session until the time which is the difference between the session disconnection time and the maximum duration time of PPP session or *Interim-Update* log transfer interval. It is calculated how many sessions were active before disconnection B. Ratio of disconnected sessions from step 3 (Z) in relation to B (Z/B) is calculated. If Z/B is higher that threshold value C, i.e. Z/B>=C, then the method proceeds to step 5c of retrieving data from the monitored resource. Otherwise, its operation is interrupted 6. Therefore, in the embodiments, when C=0.8 (80%), Z=15 of disconnected sessions, and B=20 of previously active sessions, then Z/B = 0.75, which means not fulfilling the condition and proceeding to step 6. In another embodiment, when C=0.9 (90%), Z=20, and B=20, i.e. Z/B=1, means fulfilling the condition Z/B>=C (1>=0.9) and proceeding to step 5c.

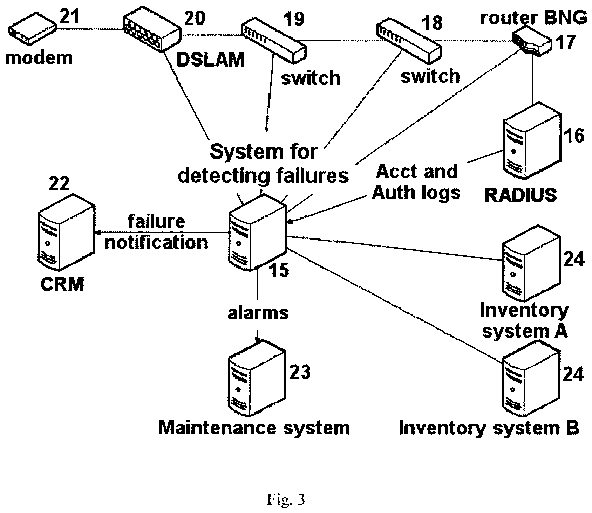

- to make sure there is a failure, it is verified on the monitored network resource. Retrieval 5c of data is performed by means of communication with a given network resource. The communication consists in sending a package to the device, processing the request by the device, preparing an answer, sending the answer, receiving and analysing the answer. In the embodiments, the executed communication is performed with the use of SNMP, NetConf, SSH, telnet, HTTP protocols. In the embodiment shown (in fig. 3), these are interfaces between the solution and DSLAM, switches and BNG/BRAS;
- occurrence of failure is confirmed 5d based on retrieved data from a specific network resource. In the embodiment, availability of the network resource is verified, and if the resource is unavailable, this confirms the failure. In another embodiment, alarms on the monitored network resource are verified, and if there are alarms, this confirms the failure. In still another embodiment, a different resource is verified which is directly connected to the analysed network resource (e.g. port, preferably the port has operational status DOWN);
- disconnections of PPP sessions are verified 5e on a device higher in the network hierarchy. If so, operation of the method is ended 6. This verification 5e is a combination of a number of simultaneously operating methods on different network resources. Verification 5e is performed by polling simultaneously operating methods analysing devices higher in the network hierarchy whether or not a failure was detected. In the embodiment in which all the resources operate within a single application, a function call can be used. In the embodiment in which the methods are performed on different servers, the retrieval can be performed with the use of, for example, WebService, HTTP, RMI. Each system element performing the method must have access to the list of all other system elements performing the method on parent resources, in relation to the verified resource, for retrieval of information on only detected events on parent resources (it does not matter whether it is on the same server or not). Equally important is that the element system performing the method must have information as to what resource exactly it must poll. For example, to which switch DSLAM is connected and whether or not a failure was detected on this switch.

If positive verification 5 of disconnection of PPP sessions occurred in the embodiment, the method generates 8 an alarm to people responsible for maintaining the network. Alarm generation 8 can be performed in many ways:
- if people responsible for monitoring use GUI (Graphical User Interface) of the monitoring system, then this can be visible in GUI, for example in the browser;
- it is also possible to send the alarm to a different monitoring system (if people use a parent system to monitor the whole network, which unifies alarms from many systems in one place), this sending is possible, for example, by means of: WebService, database, HTTP, RMI, SNMP.

Alarm generation also means recording information that alarm status is active on a given resource. This alarm is deactivated only when, after completion of further steps, the method is ended. Recording information about the alarm is very important when a parallel operating method on a lower device in the hierarchy will retrieve information whether a failure is active on a given resource.

After generation 8 of alarm to the maintenance system 23, the system 15 proceeds to notifying 9 the customers affected by the failure about the occurrence thereof and the expected time of removal. Notification 9 is sent by means of the system CRM (Customer Relationship Management) 22 which system 22 is responsible for customer relations. Inter-system communication is standard, for example performed by means of WebService, HTTP, RMI interfaces.

Then, the method proceeds to waiting to re-establish the PPP session (removal of failure).

The method verifies 10 whether the maximum waiting time for the return of the PPP session, which is equal to F hours, was exceeded. In the embodiment, F is equal to 24 hours. When this time has elapsed, then the method interrupts operation 12, thereby leaving the alarm active which finally must be deactivated manually. Verification 10 of time in the embodiment is performed by comparing the time when the failure was detected with the current time, and by verifying whether the difference exceeds the defined threshold value.

If the maximum time to remove the failure has not elapsed, the method in a loop verifies 11 threshold values of the number of PPP sessions re-established, i.e. whether minimum G% of PPP sessions were re-established. If so, the method notifies 13 the customers and/or turns the alarm off 14. If not, the method remains in the loop waiting for the session to return, i.e. returns to the step of verification 10 whether the maximum waiting time for the return of PPP sessions was exceeded. In the embodiments, G=80, G=90, G=95 or G=99.

Verification 11 of the minimum threshold value of the number of re-established PPP sessions is performed in the same way as step 5e, i.e. by searching archived RADIUS *accounting* logs, and, as before, *calling-station-id* and PPP login must be matched (waiting for the return of what has been disconnected). Logs with status *Start* are searched which occurred after the time of occurrence of group disconnection for a given resource (i.e. the method returns from the current time to the time of group disconnection). In the embodiment, the threshold value is G=90 (90%). Step identical to e) only with a different threshold value.

At the time when minimum G% of disconnected sessions are re-established, i.e. when verification 11 of the minimum threshold value of the number of re-established PPP sessions is positive, another notification is sent 13, this time about removal of the failure and about restoring access to services, which is performed the same as in step 9.

The embodiment presented above can be complemented by an optional reboot step 7. It is performed between the step of confirmation 5 of disconnection of PPP session and the step of alarm generation 8. The method performs 7a an automatic reboot of the resource for which a failure was detected (and/or dependent resources for which a failure has been detected). For example, if monitoring relates to a card on DSLAM device - this card is rebooted. If it relates to the entire DSLAM device, the entire device is rebooted. Rebooting is performed with one of the management protocols: SNMP, SSH, telnet, WebService, NetConf. It is performed by sending the *reboot* command or by turning off a given resource, or by turning it on again.

Step 7a is optional because automatic reboot is not always possible (for example, in a situation where a cable is monitored).

After the step 7a of rebooting at least one resource, the method proceeds to waiting for D minutes. In the embodiment, D is equal to 10 minutes.

Then, the minimum threshold value of the number of re-established PPP sessions is verified 7c, i.e. it is verified whether E% of sessions were re-established. This step is the same as step 5a, and in the embodiments, the threshold value is E=50 (50%), wherein in other embodiments, E is in the range of 50-80.

In Fig. 3, an architecture (a network segment) is shown where the method for detecting network failures is performed according to one of the embodiments. It can be performed on one or multiple physical servers depending on whether the computer program, under control of which the method is performed, requires the use of a cluster for increased system performance and reliability and whether the database should run on the same or on a different physical server. These aspects/characteristics are dependent on the actual implementation of the embodiment.

The system for detecting failures 15 (Fig. 3) on which, in the embodiment, the method according to the invention is performed, receives Radius *Accounting* and Radius *Authorization* logs from RADIUS server 16 which allow clarifying the causes of failure. RADIUS server 16 is connected to BNG routers 17 which are further connected to switches 18, 19. The switches 18, 19 can be connected to multiple DSLAM devices 20, to other switches 18, 19 and to the system for detecting failures 15. DSLAM 20, apart from being connected to the system for detecting failures 15 and to the switches 19, is connected to modems 21. In addition, the system for detecting failures 15 is connected to inventory systems 24 and sends information/data to a maintenance system 23 and to a CRM system 22.

The solution according to the invention, in the embodiment, includes the following logic modules run on one or multiple physical servers:
1. An application, comprising the following modules:
   1.1 A receiving module - module responsible for reception of RADIUS *Accounting* data from RADIUS server (step 1 of the method). This module performs step 1 of the method, i.e. reception and recording of RADIUS logs. Data from RADIUS servers are sent by means of RADIUS packages. It is also contemplated to connect via SSH or to analyse increasing log files if it is not possible to send data using the RADIUS protocol. SSH has the advantage of lack of data loss (uses TCP protocol, as opposed to UDP used with RADIUS protocol). Data received by this module are recorded in the database and in an array on the stack in RAM server on which the module is run. The data are recorded for their further analysis by the next modules. This module operates independently of others modules.
   1.2 An analysis module - module responsible for analysis of data recorded by the analysis module. This module performs steps 2 and 3 of the method for detecting failures. If in step 3, a condition defined therein is fulfilled, the module launches another module (an execution module) which is responsible for further analysis and actions associated with group disconnection of PPP session on a single resource.
      The analysis module is responsible for the analysis of group disconnections on one type of network resource (for example, card on DSLAM device). Other types of group disconnections are performed by identical analysis modules, but configured for a different network resource.
      It is necessary for the analysis module to be capable to associate each PPP session with an interesting type of network resource. This is performed based on retrieval of data from inventory systems 24 (Fig. 3). Due to the wide variety of network elements, they are registered in different inventory systems 24. This means that the analysis modules responsible for different network resources communicate with different inventory systems 24. Due to the considerable amount of data to be analysed, copying of inventory to the database (point 2) of the solution is very often used in order not to overload inventory systems and to search data locally only.
   1.3 An execution module - module responsible for performing analysis of detected group disconnection of PPP session on a given resource. This module coordinates steps 4 - 14 of the method for detecting failures. This module uses the following auxiliary sub-modules:
      1.3.1 A module responsible for searching in the database or on the stack for *accounting* logs recorded therein to assess how many PPP sessions among the disconnected one returned at the time of analysis. It performs steps 5a, 7c and 11 of the method for detecting failures. At the input, it requires to provide threshold value of acceptance, which differs for different steps.
      1.3.2 A module responsible for searching in the database or on the stack for *accounting* logs recorded therein to assess how many PPP sessions among the disconnected one were previously active. This module differs from the module from point 1.3.1 - searches for data since the disconnection backwards as long as a PPP session can last or as often as *Interim-Update* logs are generated in the network (if they are generated). This module performs step 5b of the method for detecting failures.
      1.3.3 A module responsible for communication with a network device. This module differs for different types of network resources in terms of its operation. For example, in the case of analysis of group disconnection of PPP session on cards of DSLAM devices, this module will communicate with DSLAM device (usually with the use of SNMP protocol) for retrieval of information about the card for which the disconnection occurred. After retrieval of data, this module also performs an analysis of retrieved data (because they are different for different types of network resources), which means that it performs steps 5c and 5d of the method for detecting failures.
      1.3.4 A coordination module - responsible for communication with other coordination modules in order to retrieve information whether a group disconnection occurred also on a resource which is higher in the network hierarchy. This module performs step 5e of the method for detecting failures. This module has a list of all coordination modules operating on different network resources. It also has a list of network elements which are higher than the analysed resource in the network hierarchy. During the retrieval of information from other coordination modules, only modules higher that the analysed resource are polled and only about resources on which the analysed resource is dependent. The retrieval of information is performed by means of WebService, database, HTTP, RMI, SNMP methods if the modules are logically separated. On the other hand, if all the modules operate within a single application, polling is performed by means of a simple function execution or RMI.
      1.3.5 A module responsible for automatic rebooting of a network resource for which a failure occurred. This module performs step 7a of the method for detecting failures. It communicates with the device in the same way as the module from point 1.3.4. This module performs the previously described method (*reboot* command or turns off and on a resource if the given resource does not support the *reboot* command).
      1.3.6 A module sending an alarm to the maintenance system 23 - informs people responsible for network management about occurrence of failure. It communicates with another system by means of previously mentioned standard protocols. This module performs step 8 of the method for detecting failures.
      1.3.7 A module sending notifications to clients - informs clients about occurrence of failure or about solving thereof. It communicates with the CRM 22 system which is dedicated to communication with clients, in addition, it communicates with another system by means of the previously mentioned standard protocols. This module performs steps 9 and 13 of the method for detecting failures.
      1.3.8 A module verifying whether the maximum waiting time for the removal of failure elapsed - it performs a simple function for comparing the current time, the time of failure occurrence and verifying whether the difference exceeds F hours. This module performs step 10 of the method for detecting failures.
      1.3.9 A waiting module - waits for a predetermined time. This module performs steps 4 and 7b of the method for detecting failures.
2. A database - serves to record the results of the solution, to store all relevant information both for the analysis after the failure and also in the course thereof (when the failure was detected, on which resource, when the returns of the session were recorded, what the results of particular steps of the method for detecting failures were etc.).

Embodiments are given here only as non-limiting indications regarding the invention and cannot in any way limit the scope of protection which is defined by the claims.

## Claims

1. A method for detecting network failures, based on data from RADIUS server within the range of PPP sessions, comprising following steps:
- receiving and recording (1) data from RADIUS server logs, then
- performing an analysis of the recorded data (2) at least once,
- then detecting (3) disconnections of PPP sessions passing through a specific network resource within a time window, then
- waiting for a further time window (4) to end and
- performing verification (5) of the disconnections of PPP sessions;
- when verification (5) of the disconnection of PPP sessions is negative, the method for detecting network failures is ended (6),
- and when verification (5) of the disconnection of PPP sessions is positive, an alarm is generated (8) to a maintenance system and/or users are notified (9); then
- performing verification (10) whether a maximum waiting time for the return of PPP sessions was exceeded, where the maximum waiting time is a defined parameter, and
- performing verification (11) of a result of comparison between the number of re-established PPP sessions and a threshold value, where the threshold value is another defined parameter;
- when verification (10) whether the maximum waiting time for the return of PPP sessions was exceeded is negative, and when the number of re-established PPP sessions is equal to or greater than the threshold value, the users (13) are notified and/or the alarm is turned off (14);
- and when verification (10) whether the maximum waiting time for the return of PPP sessions was exceeded is negative, and when the number of re-established PPP sessions is less than the threshold value, the method returning to the step of verification (10) whether the maximum waiting time for the return of PPP sessions was exceeded;
- after exceeding the maximum waiting time for the return of PPP sessions, the verification of the number of re-established PPP sessions is ended (12), wherein the step of verification (5) of the disconnection of PPP sessions includes at least one step of the following:
- performing verification (5a) of a first minimum number of re-established PPP sessions;
- performing verification (5b) of a ratio of the number of disconnected PPP sessions to previously active PPP sessions on a specific resource;
- performing retrieval (5c) of data from the specific network resource and performing confirmation (5d) of a failure occurrence on the basis of the retrieved data from the specific network resource; and
- performing verification (5e) of disconnections of PPP sessions on a device higher in a network hierarchy.

2. The method according to claim 1, **characterised in that** between the step of verification (5) of the disconnection of PPP sessions and the step of alarm generation (8), a reboot step (7) is performed which includes rebooting (7a) of at least one resource for which a failure was detected and/or of dependent resources, a step of waiting to re-establish a PPP session (7b) and verification (7c) of a second minimum number of re-established PPP sessions.

3. The method according to any one of the preceding claims, **characterised in that** the step of receiving and recording (1) is performed by a receiving module, the steps of performing an analysis (2) of the recorded data and detecting (3) of disconnections of PPP sessions at a set time are performed by an analysis module, and subsequent steps (4-14) of the method are performed by an execution module.

4. The method according to any one of the preceding claims, **characterised in that** in the step of notifying (9, 14) the users the users are notified via a Customer Relationship Management, CRM, System (22).

5. The method according to any one of the preceding claims, **characterised in that** data in the steps of:
recording (1) data from RADIUS server logs,
retrieval (5c) of data from a specific network resource, verification (5e) of disconnection of PPP sessions on a device higher in the network hierarchy, rebooting (7a) at least one resource and alarm generation (8);
performing communication by at least one means from the group consisting of protocols: IP, UDP, RADIUS, SNMP, NetConf, SSH, telenet, HTTP, WebService, RMI and by means of a database.

6. The method according to any one of the preceding claims, **characterised in that** the step of receiving and recording (1) is performed by a receiving module implemented in the RADIUS server.

7. The method according to any one of the preceding claims, **characterised in that** in the course of receiving the data from the RADIUS server logs the steps of the method are performed in real time.

8. The method according to any one of the preceding claims, **characterised in that** the steps of the method are performed under the control of a computer program.

## Patentansprüche

1. Verfahren zum Erkennen von Netzwerkausfällen, basierend auf Daten vom RADIUS-Server im Bereich von PPP-Sitzungen, umfassend folgende Schritte
- Empfangen und Aufzeichnen (1) von Daten aus Logs des RADIUS-Servers, dann
- Durchführen einer Analyse der aufgezeichneten Daten (2) mindestens einmalig,
- dann Erkennen (3) innerhalb eines Zeitfensters von Unterbrechungen von PPP-Sitzungen, die durch eine bestimmte Netzwerkressource gehen, dann
- Warten auf das Ende eines weiteren Zeitfensters (4) und
- Durchführen einer Überprüfung (5) der Unterbrechungen von PPP-Sitzungen;
- wenn die Überprüfung (5) der Unterbrechung von PPP-Sitzungen negativ ist, wird das Verfahren zum Erkennen von Netzwerkausfällen beendet (6),
- und wenn die Überprüfung (5) der Unterbrechung von PPP-Sitzungen positiv ist, wird ein Alarm (8) für ein Wartungssystem erzeugt und/oder werden Benutzer benachrichtigt (9); dann
- Durchführen einer Überprüfung (10), ob eine maximale Wartezeit für die Rückkehr von PPP-Sitzungen überschritten wurde, wobei die maximale Wartezeit ein definierter Parameter ist, und
- Durchführen einer Überprüfung (11) eines Vergleichsergebnisses zwischen der Anzahl der wiederhergestellten PPP-Sitzungen und einem Schwellenwert, wobei der Schwellenwert ein weiterer definierter Parameter ist;
- wenn die Überprüfung (10), ob die maximale Wartezeit für die Rückkehr von PPP-Sitzungen überschritten wurde, negativ ist, und wenn die Anzahl der wiederhergestellten PPP-Sitzungen gleich oder größer als der Schwellenwert ist, werden die Benutzer (13) benachrichtigt und/oder wird der Alarm ausgeschaltet (14);
- und wenn die Überprüfung (10), ob die maximale Wartezeit für die Rückkehr von PPP-Sitzungen überschritten wurde, negativ ist, und wenn die Anzahl der wiederhergestellten PPP-Sitzungen kleiner als der Schwellenwert ist, kehrt das Verfahren zu dem Schritt der Überprüfung (10) zurück, ob die maximale Wartezeit für die Rückkehr von PPP-Sitzungen überschritten wurde;
- nach Überschreiten der maximalen Wartezeit für die Rückkehr von PPP-Sitzungen wird die Überprüfung der Anzahl der wiederhergestellten PPP-Sitzungen beendet (12), wobei der Schritt der Überprüfung (5) der Unterbrechung von PPP-Sitzungen mindestens einen der folgenden Schritte umfasst:
- Durchführen einer Überprüfung (5a) einer ersten Mindestanzahl von wiederhergestellten PPP-Sitzungen;
- Durchführen einer Überprüfung (5b) eines Verhältnisses von der Anzahl der unterbrochenen PPP-Sitzungen zu zuvor aktiven PPP-Sitzungen auf einer bestimmten Ressource;
- Durchführen des Abrufs (5c) von Daten aus der spezifischen Netzwerkressource und Durchführen einer Bestätigung (5d) eines Fehlerereignisses auf der Grundlage der abgerufenen Daten aus der spezifischen Netzwerkressource; und
- Durchführen einer Überprüfung (5e) der Unterbrechungen von PPP-Sitzungen auf einer Vorrichtung, die in einer Netzwerkhierarchie höher liegt.

2. Verfahren nach Anspruch 1, **dadurch gekennzeichnet, dass** zwischen dem Schritt der Überprüfung (5) der Unterbrechung von PPP-Sitzungen und dem Schritt der Alarmerzeugung (8) ein Neustartschritt (7) durchgeführt wird, der ein Neustarten (7a) mindestens einer Ressource, für die ein Fehler erkannt wurde, und/oder abhängiger Ressourcen, einen Schritt des Wartens auf die Wiederherstellung einer PPP-Sitzung (7b) und eine Überprüfung (7c) einer zweiten Mindestanzahl von wiederhergestellten PPP-Sitzungen umfasst.

3. Verfahren nach einem der vorhergehenden Ansprüche, **dadurch gekennzeichnet, dass** der Schritt des Empfangens und Aufzeichnens (1) durch ein Empfangsmodul durchgeführt wird, die Schritte des Durchführens einer Analyse (2) der aufgezeichneten Daten und des Erkennens (3) von Unterbrechungen von PPP-Sitzungen zu einem bestimmten Zeitpunkt durch ein Analysemodul durchgeführt werden, und die nachfolgenden Schritte (4-14) des Verfahrens durch ein Ausführungsmodul durchgeführt werden.

4. Verfahren nach einem der vorhergehenden Ansprüche, **dadurch gekennzeichnet, dass** im Schritt des Benachrichtigens (9, 14) der Benutzer werden die Benutzer über ein Customer Relationship Management, CRM, System (22) benachrichtigt.

5. Verfahren nach einem der vorhergehenden Ansprüche, **dadurch gekennzeichnet, dass** Daten in den Schritten:
- des Aufzeichnens (1) von Daten aus Logs des RADIUS-Servers,
des Abrufs (5c) von Daten aus der spezifischen Netzwerkressource, der Überprüfung (5e) der Unterbrechung von PPP-Sitzungen auf einer Vorrichtung, die in einer Netzwerkhierarchie höher liegt, des Neustartens (7a) mindestens einer Resource und
der Alarmerzeugung (8);
Kommunikation durch mindestens ein Mittel aus der Gruppe bestehend aus Protokollen: IP, UDP, RADIUS, SNMP, NetConf, SSH, telenet, HTTP, WebService, RMI und mittels einer Datenbank, durchführen.

6. Verfahren nach einem der vorhergehenden Ansprüche, **dadurch gekennzeichnet, dass** der Schritt des Empfangens und Aufzeichnens (1) durch ein im RADIUS-Server implementiertes Empfangsmodul durchgeführt wird.

7. Verfahren nach einem der vorhergehenden Ansprüche, **dadurch gekennzeichnet, dass** im Zuge des Empfangens von Daten aus Logs des RADIUS-Servers die Schritte des Verfahrens in Echtzeit durchgeführt werden.

8. Verfahren nach einem der vorhergehenden Ansprüche, **dadurch gekennzeichnet, dass** die Schritte des Verfahrens unter der Kontrolle eines Computerprogramms durchgeführt werden.

## Revendications

1. Procédé de détection de défaillance de réseau, basé sur des données de serveur RADIUS, dans la gamme des sessions PPP, **caractérisé par ce que**
- les données des journaux du serveur RADIUS sont reçues et enregistrées (1), puis
- l'analyse des données enregistrées est effectuée (2) au moins une fois,
- puis des déconnexions de sessions PPP passant par une ressource réseau spécifique dans une fenêtre temporelle sont détectées (3), puis
- une autre fenêtre de temps est attendue (4) pour se terminer et
- une autre fenêtre de temps est attendue (4) pour se terminer et
- lorsque la vérification (5) de la déconnexion des sessions PPP est négative, le procédé de détection de défaillance est terminé (6),
- et lorsque la vérification (5) de la déconnexion des sessions PPP est positive, une alarme est générée (8) vers un système de maintenance et/ou les utilisateurs sont notifiés (9); puis
- effectuer la vérification (10) si le temps maximal d'attente pour le retour des sessions PPP a été dépassé, où le temps maximal d'attente est un paramètre défini, et
- effectuer la vérification (11) d'un résultat de comparaison entre le nombre de sessions PPP rétablies et une valeur de seuil, où la valeur de seuil est un autre paramètre défini;
- lorsque la vérification (10) si le temps maximal d'attente pour le retour des sessions PPP a été dépassé est négative, et lorsque le nombre de sessions PPP rétablies est égal ou supérieur à la valeur seuil, les utilisateurs (13) sont informés et/ou l'alarme est désactivée (14);
- et lorsque la vérification (10) si le temps maximal d'attente pour le retour des sessions PPP a été dépassée est négative, et lorsque le nombre de sessions PPP rétablies est inférieur à la valeur seuil, le procédé retourne à l'étape de vérification (10) si le temps maximal d'attente pour le retour des sessions PPP a été dépassé;
- après le dépassement du temps maximal d'attente pour le retour des sessions PPP, la vérification du nombre de sessions PPP rétablies est terminée (12), où l'étape de vérification (5) de déconnexion de sessions PPP comprend au moins une étape parmi les suivantes:
- effectuer la vérification (5a) du premier nombre minimum de sessions de PPP rétablies;
- effectuer la vérification (5b) du rapport entre le nombre de sessions PPP déconnectées et les sessions PPP précédemment actives sur une ressource spécifique;
- effectuer la récupération (5c) de données de la ressource de réseau spécifique;
- confirmation (5d) d'une occurrence de défaillance sur la base des données extraites de la ressource de réseau spécifique; et
- effectuer la vérification (5e) des déconnexions de sessions PPP sur un périphérique situé plus haut dans la hiérarchie du réseau.

2. Procédé selon la revendication 1, **caractérisé en ce que,** entre l'étape de vérification (5) de déconnexion de sessions PPP et l'étape de génération (8) d'alarme, une étape (7) de redémarrage est effectuée, laquelle comprend le redémarrage (7a) d'au moins une ressource pour laquelle une défaillance a été détectée et/ou des ressources dépendantes, une étape d'attendre pour rétablir une session PPP (7b) et une vérification (7c) du nombre minimum de sessions PPP rétablies.

3. Procédé selon l'une quelconque des revendications précédentes, **caractérisé en ce que** l'étape de réception et d'enregistrement (1) est effectuée par un module de réception, l'étape d'analyse (2) des données enregistrées et de détection (3) de la déconnexion de sessions PPP à un moment déterminé est exécutée par un module d'analyse, et les étapes suivantes (4-14) du procédé sont exécutées par un module d'exécution.

4. Procédé selon l'une quelconque des revendications précédentes, **caractérisé en ce que** dans l'étape de notification (9, 14), les utilisateurs sont notifiés par un système de gestion de la relation client, CRM.

5. Procédé selon l'une quelconque des revendications précédentes, **caractérisé en ce que** les données dans les étapes de:
enregistrement (1) des données des journaux du serveur RADIUS,
récupération (5c) des données d'une ressource réseau spécifique, vérification (5e) de la déconnexion des sessions PPP sur un dispositif situé plus haut dans la hiérarchie du réseau,
réinitialisation (7a) d'au moins une ressource et
génération (8) d'alarme;
effectuer la communication par au moins un moyen du groupe constitué des protocoles: IP, UDP, RADIUS, SNMP, NetConf, SSH, telenet, HTTP, WebService, RMI et au moyen d'une base de données.

6. Procédé selon l'une quelconque des revendications précédentes, **caractérisé en ce que** l'étape de réception et d'enregistrement (1) est effectuée par un module de réception implémenté dans le serveur RADIUS.

7. Procédé selon l'une quelconque des revendications précédentes, **caractérisé en ce que** lors de la réception des données des journaux du serveur RADIUS, les étapes du procédé sont effectuées en temps réel.

8. Procédé selon l'une quelconque des revendications précédentes, **caractérisé en ce que** les étapes du procédé sont effectuées sous le contrôle d'un programme d'ordinateur.
